# EUROPÄISCHE PATENTSCHRIFT

(11) **EP 3 300 560 B1**
(45) Veröffentlichungstag und Bekanntmachung des Hinweises auf die Patenterteilung: **06.11.2019**
(21) Anmeldenummer: 17192895.5
(22) Anmeldetag: 25.09.2017
(51) Int. Cl.: A01B 63/111, A01B 63/112, A01B 63/114

(54) **VORRICHTUNG UND VERFAHREN ZUR REGELUNG DES BETRIEBS EINES HYDRAULISCH BETÄTIGBAREN SCHLEPPGERÄTS AN EINEM FAHRZEUG**
DEVICE AND METHOD FOR GOVERNING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN APPAREIL DE REMORQUAGE HYDRAULIQUE D'UN VÉHICULE

(30) Priorität: 29.09.2016 DE 102016218789
(43) Veröffentlichungstag der Anmeldung: 04.04.2018
(73) Patentinhaber: Robert Bosch GmbH, 70442 Stuttgart (DE)
(72) Erfinder: Schleyer, Markus, 71640 Ludwigsburg (DE); Rose, Steffen, 71638 Ludwigsburg (DE); Michalke, Gabriele, 71263 Weil Der Stadt (DE)
(74) Vertreter: Thürer, Andreas

(56) Entgegenhaltungen:
- EP-A1- 1 238 577
- EP-A1- 3 178 302
- EP-A2- 1 862 050
- WO-A1-2016/076289

## Beschreibung

Die vorliegende Erfindung betrifft eine Vorrichtung für ein Fahrzeug, insbesondere einen Traktor mit einer hydraulischen Betätigungseinheit zur Regelung des Betriebs eines Schleppgeräts an dem Fahrzeug, sowie ein hierfür geeignetes Betriebsverfahren. Insbesondere findet die Erfindung Anwendung bei einem Traktor, einem landwirtschaftlichen Ackerschlepper, einer mobilen Arbeitsmaschine zur Feldbearbeitung oder dergleichen. Traktoren bzw. Ackerschlepper werden als universell einsatzbare Arbeitsmaschinen vorrangig in der Landwirtschaft zur Bearbeitung von Ackerböden eingesetzt.

Das Pflügen stellt einen wichtigen Arbeitsgang in der landwirtschaftlichen Bodenbearbeitung dar. Ziel dabei ist ein möglichst gleichmäßiges Pflugbild zu erreichen. Das bedeutet eine einheitliche Breite und Tiefe der Furchen, die von den einzelnen Pflugscharen hinterlassen werden und zwar unabhängig von etwaigen Änderungen in der Bodentopologie.

Eine bekannte Vorrichtung basiert vor allem auf der gemessenen Zugkraft, die der Pflug auf das Zugfahrzeug ausübt. Bei einer gleichbleibenden Zugkraft kann von einer gleichbleibenden Pflugtiefe ausgegangen werden. Die Höhe des Pflugs wird also so geregelt, dass sich ein gleichbleibender Zugkraftwert ergibt.

Das Pflügen stellt hohe Anforderungen an den Antriebsstrang des Traktors und die Regelgüte einer elektronisch-hydraulischen Hubwerksregelung, denn nur mit einem abgestimmten Betrieb können die Pflügearbeiten schnell und effizient durchgeführt werden. Vor allem bei stark inhomogenen und sehr feuchten Böden besteht aufgrund einer sehr großen Widerstandskraft am Pflug die Möglichkeit, dass der Traktor steckenbleibt und/oder der Motor abgewürgt wird. Zusätzlich zu einer Lageregelung des Pflugs kann eine Zugkraftregelung vorgesehen sein, die ein Abwürgen des Motors dadurch zu verhindern versucht, dass die Zugkraft am traktorseitigen Gelenk des Unterlenkers gemessen und diese bzw. deren Gradient auf einen Wert geregelt wird, welcher ein Abwürgen des Motors verhindert bzw. eine Reduzierung des Schlupfs der Antriebsräder bewirkt. Dies geschieht insbesondere durch (kurzzeitiges) Anheben des Pflugs und der daraus resultierenden Verringerung der Widerstandskraft des Pflugs. Zudem verbessert sich bei sehr inhomogenen Böden das Resultat des Pflugprozesses, da der Pflug in sehr dichten Bodenbereichen seine Pflugtiefe verringern würde. Bei sehr welligen und unebenen Böden verbessert sich ebenso das Pflugbild und der Komfort wird erhöht, da sich die Pflugtiefe über die variierende Zugkraft dem Bodenprofil besser anpasst, als wenn Lage bzw. Tiefe des Pflugs geregelt werden würde.

Um die Lage des Pflugs zu regeln, ist es bekannt, die Lage des Hubwerks als Regelgröße heranzuziehen. Der Lagesensor, der von einer Kurvenscheibe im Hubwerk betätigt wird, liefert den Ist-Wert. Ein zusätzlich der Lageregelung überlagerter Zugkraftregelkreis sieht für die Ermittlung der Zugkraft zwei Kraftmessbolzen vor, die in das Gelenk des Unterlenkers eingebaut sind. Als Lagesensor ist in der EP-A-3178302 eine Kamera vorgeschlagen worden. Um die Lage des Pflugs im Raum und somit auch seine Tiefe bzw. Höhe (Höhenlage) ermitteln zu können, ist die Kamera hin auf mindestens eine Lageerfassungsmarkierung gerichtet, die im Betrieb oberhalb auf einem Träger des Schleppgeräts angeordnet sind. Das Erfassen der Lage des Pflugs im Raum und somit auch seine Tiefe bzw. Höhe (Höhenlage) erfolgt indirekt (mittelbar) über die - auf dem Pflug angebrachten - Lageerfassungsmarkierungen, so dass eine direkte (unmittelbare) Ermittlung der Lage der Pflugscharen nicht möglich ist.

Im Zusammenhang mit dem Ankoppeln von Schleppgeräten an ein Fahrzeug ist bekannt, die Anspannschnittstelle am Arbeitsfahrzeug bei der Bewegung hin zu einer entfernten und abgetrennten Anspannschnittstelle der Landmaschine automatisch auszurichten. Für diesen Ausrichtprozess bzw. die Anfahrt kann eine Bilderfassungseinheit genutzt werden, mit der die räumliche Lage der beiden getrennten Anspannschnittstellen erfassbar ist. Beipspiele für entsprechende Verfahren und Vorrichtungen finden sich in der EP-A-1 862 050 und EP-A-1 238 577. Diese sind jedoch nicht unmittelbar einsetzbar für die Regelung des Betriebs eines Schleppgeräts an dem Fahrzeug während der Fahrt.

Die WO-A-2016/076289 beschreibt ein landwirtschaftliches Arbeitsfahrzeug, das mit einer Fernsteuerungsvorrichtung gesteuert und veranlasst wird, mit einer optimalen Arbeitsgeschwindigkeit und einem optimalen Antriebswert entlang einer eingestellten Fahrstrecke zu arbeiten. An ein Steuergerät des Arbeitsfahrzeugs ist eine Positionsberechnungseinrichtung zum Messen der Position des Arbeitsfahrzeuges angeschlossen. Weiterhin ist an das Steuergerät eine Kamera angeschlossen, um eine an das Arbeitsfahrzeug angebaute Arbeitsmaschine abzubilden. Die Kamera ist an dem Arbeitsfahrzeug angeordnet. Dieses Konzept ist allein auf den Fahrbetrieb des Arbeitsfahrzeugs eingerichtet und ermöglicht insoweit nur eine Steuerung der Fahrzeugbewegung des Arbeitsfahrzeugs.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung der Lage des Schleppgeräts Bedarf an Verbesserungen. Die bekannte Maßnahme, die vom Pflug erzeugte Zugkraft als Indikator für die Pflugtiefe heranzuziehen, hat unter anderem folgende Nachteile: Eigens zur Bestimmung der Zugkraft müssen Kraftsensoren in den Unterlenkern des Traktors verbaut werden, die kostenaufwendig sind. Außerdem kann die Zugkraft immer nur ein Maß für die durchschnittliche Tiefe aller Pflugscharen sein. Einzelne Pflugscharen können aber durchaus abweichen, wenn der Pflug verkippt ist. Somit kann trotz gleichbleibender Zugkraft ein ungleichmäßiges Pflugbild entstehen.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld geeignete Art, die Ermittlung der Lage des Schleppgeräts verbessert werden. Außerdem soll das Verfahren automatisch eine korrekte Einstellung des Schleppgeräts ermöglichen.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt eine Vorrichtung an einem Fahrzeug mit einer hydraulischen Betätigungseinheit zur Regelung des Betriebs eines Schleppgeräts an dem Fahrzeug bei, wobei das Schleppgerät mindestens eine Pflugschar aufweist, umfassend zumindest eine Lageerfassungseinheit mit mindestens einer Kamera, einer Auswerteeinheit und eine datenleitende Verbindung hin zu einem der hydraulischen Betätigungseinheit zugeordneten Steuergerät, wobei die mindestens eine Kamera im Betrieb so hin auf die mindestens eine Pflugschar und den Boden gerichtet ist, dass eine Tiefenlage der mindestens einen Pflugschar direkt ermittelbar ist.

Dabei handelt es sich bei dem Fahrzeug insbesondere um einen Traktor bzw. einen sogenannten Ackerschlepper. Als Schleppgerät wird insbesondere ein Pflug oder ein ähnliches Bodenbearbeitungsgerät angesehen. Zur Bestimmung der Lage, insbesondere der Höhenlage des Schleppgeräts über Boden, ist eine Lageerfassungseinheit vorgesehen, die mindestens eine Kamera umfasst. Bevorzugt ist, dass - außer dem Boden - einzelne oder alle (insbesondere unterhalb des Trägers befindliche) Pflugscharen von mindestens einer feststehenden (ggf. auch beweglichen) Kamera erfasst werden können. Eine zugehörige Auswerteeinheit ist mit der mindestens einen Kamera elektrisch und datenleitend verbunden und eingerichtet, deren Betrieb zu regeln und deren Messsignale zu verarbeiten. Die Auswerteeinheit ist eingerichtet, eine Analyse der Bilddaten der Kamera vorzunehmen, so dass die Pflugscharen eindeutig bezüglich ihrer Lage/Position erfasst bzw. bestimmt werden können.

Die in der Auswerteeinheit bestimmte Lage wird mit vorgegebenen (z. B. gespeicherten und/oder von dem Bediener des Fahrzeugs eingestellten) Parametern abgeglichen oder beeinflusst, wobei dann auch ein Regelungssignal an das Steuergerät übermittelt wird und dabei der Betrieb der hydraulischen Betätigungseinheit des Schleppgeräts beeinflusst wird. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens eine) datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Die mindestens eine Kamera ist hierfür zweckmäßigerweise hin auf die mindestens eine (insbesondere unterhalb des Trägers befindliche) Pflugschar gerichtet. Dies kann permanent der Fall sein, oder auch bedarfsgerecht so (temporär) eingestellt werden.

Dadurch, dass die mindestens eine Kamera auf das Schleppgerät mit der mindestens einen Pflugschar gerichtet ist, besteht ein Vorteil darin, dass die bekannte Geometrie bzw. die Abmessungen eines bestimmten Pflugs in der Auswerteeinheit, dem Steuergerät oder der Fahrzeugsteuerung gespeichert und für die Auswertung so einfach bereitgestellt werden kann. Damit kann ggf. die Genauigkeit der Auswertung mit Bezug auf konkret hinterlegte Gestaltungen des Schleppgeräts verbessert werden.

Die Erfindung zielt darauf ab, die beim Pflügen relevanten Prozessgrößen, d.h. die Tiefe der einzelnen (insbesondere unterhalb des Trägers befindlichen) Pflugscharen, direkt (optisch bzw. visuell) zu bestimmen, anstatt Zwischengrößen heranzuziehen, die zwar gute Indikatoren darstellen, aber nur indirekt die Prozessgrößen abbilden. Dies erfolgt über eine Kamera, so dass die Zugkraftsensoren entfallen.

Der vorgeschlagenen Vorrichtung liegt der Gedanke einer kamerabasierten Bestimmung der Tiefen (gegenüber der Bodenoberfläche) der einzelnen (insbesondere unterhalb des Trägers befindliche) Pflugscharen zugrunde. Dadurch kann die Position des Pflugs zur Bodenoberfläche direkt bestimmt werden und die Sicherstellung eines gleichmäßigen Pflugbilds deutlich vereinfacht werden. Außerdem kann bei Vorhandensein der nötigen Stellglieder automatisch eine korrekte Einstellung des Pflugs erfolgen, was ansonsten Aufgabe des Fahrers ist.

Bei der Erfindung können die Pflugtiefe und die Ausrichtung des Pflugs (Winkel über dem Boden) aus einer direkten Beobachtung der Pflugscharen ermittelt werden.

Ein besonderer Vorteil der vorgeschlagenen Maßnahmen ist die direkte Bestimmung der für den Prozess Pflügen relevanten Größen (Tiefe der einzelnen Pflugscharen). Die bekannte gemessene Zugkraft kann nur einen Durchschnittswert aller (insbesondere unterhalb des Trägers befindlichen) Pflugscharen abbilden. Fehler durch Verkippung sind hierbei möglich, ohne detektiert werden zu können. Ein weitere Vorteil der vorgeschlagenen Vorrichtung besteht in der Ermöglichung der Nutzung weiterer Freiheitsgrade bei der Verstellung des Pflugs: Die Nachteile der bekannten Vorrichtung werden vermieden, bei der nur die Höhe des Pflugs verstellt wird, nicht aber die Neigung/Verkippung des Pflugs in Längs- oder Querrichtung. Da hierbei zudem keine Information vorliegt, in welchem Winkel der Pflug zur Bodenoberfläche steht, ist die Neigung über einen Aktor dynamisch nicht einzustellen. Der Fahrer kann die Längsneigung lediglich über die Länge des Oberlenkers feststellen, die Querneigung über eine Einstellschraube. Er wird dies in der Regel so tun, dass sich eine gleichmäßige Tiefe bei ebener Bodenoberfläche ergibt. Bei sich ändernder Bodentopologie oder falscher Einstellung ist ein partielles Eintauchen bzw. Ausheben des Pflugs und damit ein ungleichmäßiges Pflugbild nicht zu vermeiden. Oft sind bereits hydraulische Aktoren zur Verstellung der Oberlenkerlänge und des Drehwinkels des Pflugs vorhanden. Diese können genutzt werden, um die Längs- und Querneigung des Pflugs optimal zur Bodenoberfläche auszurichten. Durch die automatische Einstellung aller Pflugfreiheitsgrade wird im Gegensatz zu der bekannten Vorrichtung dem Fahrer der oft langwierige Einstellprozess vor dem Pflügen abgenommen. Außerdem können Fehleinstellungen, die in einem ungleichmäßigen Pflugbild resultieren, vermieden werden. Ein weiterer Vorteil besteht im Kosteneinsparpotential durch Entfallen zur Zugkraftsensoren und insbesondere bei Nutzung einer bereits vorhandenen Rückfahrkamera.

Bevorzugt ist, dass mindestens eine Kamera so ausgerichtet ist, dass diese die seitliche Form mindestens einer (insbesondere unterhalb des Trägers befindlichen) Pflugschar im Betrieb des Schleppgeräts erfassen kann.

Die Kamera kann dazu seitlich zur Achse des Pfluges versetzt angeordnet und/oder positionierbar sein.

Mindestens eine Kamera (Spezialkamera) kann zu diesem Zweck so eingerichtet sein, dass diese einen Bildbereich hat, der (deutlich) kleiner ist, als die Dimensionen (Abmessungen, insbesondere hinsichtlich Breite und Länge) des Schleppgeräts. Ein kleinerer Bildbereich kann z. B. eine Fläche erfassen, die kleiner als die Hälfte der Dimensionen des Schleppbereichs ist, z. B. kleiner als die dreifache (seitliche) Fläche einer Pflugschar. Dieser kleine Bildbereich kann voreingestellt sein, z. B. mittels einer entsprechenden Optik, und/oder im Betrieb eingerichtet werden, indem dieser Bildbereich mittels Zoom und/oder einem bewegbaren Arm einstellbar ist. Es kann mindestens ein Bildbereichsvergrößerungsmittel und/oder eine Bewegungsapparatur bei der mindestens einen Kamera vorgesehen sein. Es ist möglich, dass mindestens eine Kamera mit einem kleineren Bildbereich zusätzlich zu einer Rückfahrkamera vorgesehen ist, die üblicherweise zur Draufsicht auf das gesamte Schleppgerät vorgesehen ist. Für das nachfolgend erläuterte Verfahren können mindestens eine Spezialkamera und eine Rückfahrkamera vorgesehen sein und gemeinsam eingesetzt werden.

Die hydraulische Betätigungseinheit umfasst bevorzugt ein Hubwerk für das Schleppgerät, das von der Auswerteeinheit aktivierbar ist. Hierfür sind insbesondere elektrische oder datenleitende Verbindungen vorgesehen. Insbesondere sind die Auswerteeinheit und das Hubwerk so eingerichtet, dass die Auswerteeinheit mindestens eine Zustandsgröße einstellen und/oder auf ein Stellorgan des Hubwerks zugreifen kann.

Zweckmäßig umfasst das Hubwerk einen Unterlenkerzylinder. Vorzugsweise umfasst das Hubwerk einen Oberlenkerzylinder. Mit Vorteil umfasst die hydraulische Betätigungseinheit einen Wendezylinder des Schleppgeräts.

Bevorzugt ist an der mindestens einen Pflugschar mindestens ein Ansatz vorhanden, der über die Pflugschar hinausragt, und damit beispielsweise auch bei einer Eindringtiefe der Pflugschar über deren Höhe noch aus dem Boden herausragt. Der Ansatz erstreckt sich insbesondere über die dem Boden gegenüberliegende Kante einer Pflugschar. Der Ansatz kann ein separates Bauteil sein. Der Ansatz kann nach Art einer Antenne, einer Positionsmarke, eines Schildes oder dergleichen ausgeführt sein. Der Ansatz kann sich beispielsweise mindestens 10 Zentimeter über die Kante einer Pflugschar erstrecken, bevorzugt aber nicht mehr als 30 Zentimeter. Der Ansatz kann eine Positionsmarkierung und/oder Form aufweisen, die visuell mittels der Kamera leicht identifizierbar ist. Der Ansatz kann auch als Ausrichtmittel für die Kamera zur Einstellung eines vorgegebenen Bildbereichs dienen.

Es ist zweckmäßig, dass die mindestens eine Kamera am Fahrzeug und/oder dem Schleppgerät angeordnet ist. Gegebenenfalls können auch mehrere Kameras vorgesehen sein, so dass Fahrzeug und Schleppgerät mit einer Kamera ausgeführt sein können, der spezifischen Funktionen (Lageermittlung aller oder einzelner Pflugscharen) zugeordnet sind.

Es ist möglich, dass mindestens eine Kamera auf das Schleppgerät und den Boden gerichtet ist. Es ist möglich, Informationen aus der visuellen Überwachung der Gesamtlage des Schleppgeräts mit Informationen aus der visuellen Überwachung einer oder mehrerer Pflugscharen zu kombinieren.

Weitere Details der Vorrichtung ergeben sich auch aus der nachfolgenden Erläuterung zu dem Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Weiter wird hier ein Verfahren zum Betrieb eines Fahrzeugs, insbesondere eines Traktors, mit einer hydraulischen Betätigungseinheit zur Regelung des Betriebs eines Schleppgeräts an dem Fahrzeug vorgeschlagen. Das Verfahren kann insbesondere mit der hier ebenfalls vorgeschlagenen Vorrichtung durchgeführt werden, wobei insbesondere die Auswerteeinheit dazu eingerichtet ist, das Verfahren durchzuführen.

Das Verfahren umfasst zumindest die folgenden Schritte:
a) Erfassen der mindestens einen Pflugschar und des angrenzenden Bodens mittels einer darauf gerichteten Kamera;
b) Ermitteln eines Flächenanteils der mindestens einen Pflugschar, der nicht vom Boden bedeckt ist;
c) Vergleichen des ermittelten Flächenanteils mit einem vorgegebenen Referenz-Flächenanteils;
d) Aktivieren der hydraulischen Betätigungseinheit, wenn der ermittelte Flächenanteil von dem Referenz-Flächenanteil abweicht.

Die Schritte a) bis d) werden bevorzugt in der angegebenen Reihenfolge durchgeführt, wobei gleichwohl die Schritte zumindest teilweise zeitlich überlagert und/oder separat wiederholt werden können. So kann es beispielsweise auftreten, dass die Schritte a) bis c) häufiger wiederholt werden, bevor Schritt d) durchgeführt wird, nämlich insbesondere erst dann, wenn die Bedingung in Schritt d) erfüllt ist.

Zur Durchführung von Schritt a) erfasst eine ausgewählte bzw. ggf. speziell eingerichtete Kamera die Lage der mindestens einen Pflugschar und des Bodens, wobei sie insbesondere ein Abbild (ggf. mit vorgegebenen Bildbereich) davon erstellt und an die Auswerteeinheit übermitteln kann. Zu diesem Zweck kann die Kamera verfahren bzw. geschwenkt werden und/oder in einer Position ortsfest fixiert sein. Dieses Abbild kann gleichzeitig analysiert und/oder ggf. zwischengespeichert werden.

Ausgehend von diesen seitens der Kamera erzeugten (Bild-)Daten kann gemäß b) zumindest der Flächenanteil einer Pflugschar ermittelt oder bestimmt werden, der nicht vom Boden bedeckt ist. Der Flächenanteil kann die Größe der freiliegenden (Seiten-) Fläche der Pflugschar umfassen. Der Flächenanteil kann die Form der freiliegenden (Seiten-) Fläche der Pflugschar umfassen. Der Flächenanteil kann direkt für die Bestimmung einer Höhenlage der Pflugschar bzw. des Schleppgerätes genutzt werden. Die (insbesondere geodätische) "Höhenlage" betrifft in diesem Zusammenhang bevorzugt eine Kenngröße, die beispielsweise eine Aussage zur Eindringtiefe der Pflugschar bzw. des Schleppgeräts in den Boden repräsentiert.

Der so ermittelte Flächenanteil kann insbesondere in der Auswerteeinheit mit einem vorgegebenen und/oder aktuell erwarteten Referenz-Flächenanteil verglichen werden (Schritt c)). Der Referenz-Flächenanteil kann im Fahrzeug errechnet werden, hinterlegt und/oder gespeichert sein und der Auswerteeinheit zur Verfügung gestellt werden. Der (aktuelle) Referenz-Flächenanteil wird insbesondere in Abhängigkeit mindestens eines (aktuellen) Betriebsparameters des Fahrzeugs (z. B. Geschwindigkeit, Motorlast, etc.) und/oder der hydraulischen Betätigungseinheit (z. B. Hubwerkseinstellung, etc.) vorbestimmt oder ausgewählt. Insoweit wird insbesondere geprüft, ob eine gewünschte bzw. erwartete Referenz-Lage relativ zum Boden tatsächlich aktuell vorliegt.

Gemäß Schritt d) wird dann, wenn der ermittelte Flächenanteil von dem aktuell relevanten bzw. erwarteten Referenz-Flächenanteil abweicht, die hydraulische Betätigungseinheit aktiviert, um eine Anpassung der aktuellen Lage der mindestens einen Pflugschar und/oder des Schleppgeräts hin zur gewünschten Lage vorzunehmen, bspw. insbesondere die Höhenlage des Schleppgeräts über dem Boden anzuheben oder abzusenken. Gegebenenfalls kann dieser Betätigungsvorgang auch mit den in den Schritten a) bis c) genannten Schritten überwacht und geregelt werden. Es ist aber auch möglich, dass eine separate Vorgabe aus dem Vergleich gemäß Schritt c) fest vorgegeben und gesteuert wird.

Bevorzugt ist dabei, dass alle Schritte a) bis d) während der Fahrt des Fahrzeugs durchgeführt werden. Ganz bevorzugt wird das Verfahren vom Fahrer und/oder automatisch mit vorgebbaren Fahrsituationen angestoßen und intermittierend und/oder kontinuierlich durchgeführt, bis dieses vom Fahrer und/oder automatisch bei vorgebbaren Fahrsituationen beendet wird.

Mittels einer Lageerfassungseinheit kann die Lage des Schleppgeräts bestimmt und bedarfsorientiert die Lage durch einen geeigneten Betrieb der hydraulischen Betätigungseinheit eingestellt werden.

Zweckmäßig wird als Lage die Höhe der mindestens einen Pflugschar über dem Boden ermittelt. Vorzugsweise wird (zusätzlich oder speziell) die Neigung der mindestens einen Pflugschar ermittelt. Bevorzugt wird (zusätzlich oder speziell) eine Drehung der mindestens einen Pflugschar um eine Längsachse ermittelt. Es ist (zusätzlich oder speziell) möglich, eine Drehung der mindestens einen Pflugschar um eine Höhenachse zu ermitteln.

Weiter wird die Verwendung einer Kamera an einem Fahrzeug mit einer hydraulischen Betätigungseinheit vorgeschlagen, wobei das Fahrzeug ein Schleppgerät umfasst. Die Kamera wird dabei zur Ermittlung eines freiliegenden Flächenanteils mindestens einer Pflugschar des Schleppgeräts und zur Regelung der Lage des Schleppgeräts an dem Fahrzeug im Betrieb eingesetzt.

Die hier aufgezeigte Anordnung und/oder Methode zur Lagereglung bietet insbesondere die Vorteile, dass die Lage (Position) bzw. Tiefe des Schleppgeräts, insbesondere eines Pflugs, durch die Bestimmung der Lage mittels der Kamera in verlässlicher, genauer und technisch einfacher Weise realisiert ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder vorstehenden Beschreibungen frei kombinierbar, es sei denn, dass sich für einen Fachmann zwingend etwas anderes ergibt, bzw. eine solche Kombination hier explizit untersagt wird. Es zeigen:
- Fig. 1:: schematisch eine Seitenansicht eines Traktors mit einer hydraulischen Betätigungseinheit zur Regelung des Betriebs eines Schleppgeräts, umfassend eine Kamera für eine Lageerfassungseinheit;
- Fig. 2:: Seitenansicht gemäß Fig. 1, bei der die am Fahrzeug angebrachte Kamera konkrete Pflugscharen des Schleppgeräts und den angrenzenden Boden ausrichtbar ist;
- Fig. 3a bis 3c:: eine Pflugschar mit Darstellung einer Höhe über dem Boden (Fig. 3a), einen Winkel über dem Boden (Fig. 3b) und einer Lage unter dem Boden (Fig. 3c);
- Fig. 4a, 4b:: eine bevorzugt einzustellende Position von drei Pflugscharen;
- Fig. 5a, 5b:: eine unterschiedliche Höhenlage von drei Pflugscharen;
- Fig. 6a, 6b:: in Vorderansicht (Fig. 6a) und in Seitenansicht (Fig. 6b) eine verkippte Position von drei Pflugscharen;
- Fig. 7:: ein Fahrzeug und Unterlenkerzylinder und Oberlenkerzylinder; und
- Fig. 8 bis 11:: Positionen von zwei Pflugscharen mit unterschiedlicher Höhenlage (Fig. 8a, 8b), unterschiedlicher Neigung (Fig. 9a, 9b), unterschiedlicher Drehung um eine Längsachse (Fig. 10a, 10b) und unterschiedlicher Drehung um eine Höhenachse (Fig. 11a, 11b).

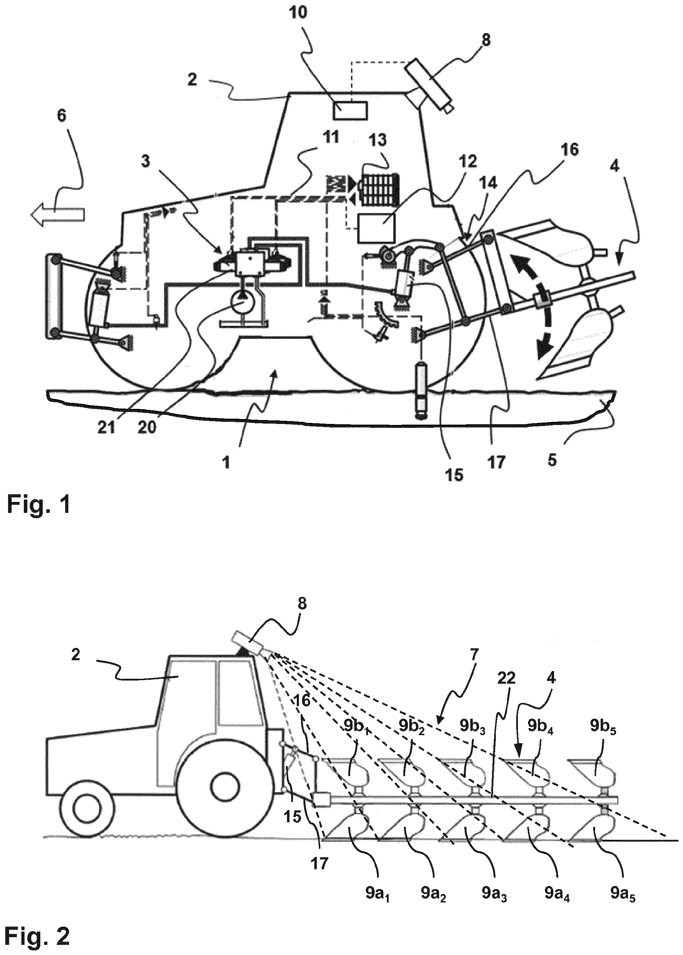

Fig. 1 zeigt die prinzipielle Darstellung der hier angegebenen Vorrichtung 1 an einem Fahrzeug 2, insbesondere nach Art eines Traktors bei der Bodenbearbeitung und einem Schleppgerät 4, insbesondere mit einem Pflug. Dabei zieht das Fahrzeug 2 bei einer Fahrt in Fahrtrichtung 6 das Schleppgerät 4 hinter sich her und durch eine Oberschicht des Bodens 5. Der allgemeine Fahrbetrieb des Fahrzeugs 2 kann über eine (ggf. separate) Fahrzeugsteuerung 12 beeinflusst werden. Die Lage bzw. Position des Schleppgeräts 4 kann mit einer hydraulischen Betätigungseinheit 3, aufweisend ein Steuergerät 13 zur Ansteuerung der hydraulischen Betätigungseinheit 3 und ein Hubwerk 14 eingestellt werden. Die hydraulische Betätigungseinheit 3 kann insbesondere wie folgt aufgebaut sein: Die Pumpe 20 fördert einen Ölstrom zum Regelventil 21, welches einen Unterlenkerzylinder 15 steuert. Dieser wirkt auf die Unterlenker 17, wodurch das Schleppgerät 4 gehoben, gehalten oder abgesenkt werden kann.

Weiter ist eine (einzelne, speziell zur Durchführung des hier vorgeschlagenen Verfahrens geeignete und eingerichtete) Kamera 8 einer Lageerfassungseinheit 7 vorgesehen, die an bzw. auf dem Fahrzeug 2 angebracht ist. Die Kamera 8 ist auf das Schleppgerät 4 gerichtet und kann insbesondere einzelne oder wenige Pflugscharen fokussiert erfassen. Die Kamera 8 kann z. B. eine für optische Messungen geeignete Rückwärts- bzw. Rückfahrkamera oder eine speziell für den hier beschriebenen Anwendungszweck verbaute Digitalkamera (hochauflösend) sein.

Um die Lage des Pflugs im Raum und somit auch seine Tiefe bzw. Höhe (Höhenlage 25) ermitteln zu können, sind gemäß Fig. 2 an dem Pflug beispielsweise zehn Pflugschare 9a₁ bis 9a₅; 9b₁ bis 9b₅. beidseitig - d.h. unterhalb bzw. oberhalb des Halters 22 - angebracht. Zudem sind die Geometrien bzw. die Abmessungen des Pflugs bekannt.

Zudem ist hier beispielhaft ein Verfahren zum Betrieb des Fahrzeugs 2 mit einer hydraulischen Betätigungseinheit 3 zur Regelung des Betriebs eines Schleppgeräts 4 veranschaulicht. Zunächst werden die Pflugscharen 9a₁ bis 9a₅ und der angrenzende Boden 5 mittels der darauf gerichteten Kamera 8 erfasst. Dann wird die (aktuelle) Höhenlage 25 der Pflugschare 9a₁ bis 9a₅ in Bezug auf den Boden 5 aus der erfassten Lage bzw. des herausragenden Flächenanteils der Pflugschare 9a₁ bis 9a₅ und der bekannten Gestalt der Pflugschare bzw. des Schleppgeräts 4 ermittelt. Die so ermittelte Höhenlage 25 bzw. der so ermittelte Flächenanteil wird dann mit einer (gespeicherten bzw. aktuell gewünschten) Referenz-Höhenlage 26 bzw. einem Referenz-Flächenanteil verglichen. Wenn hierbei eine unerwünscht große Abweichung festgestellt wird, wird die hydraulische Betätigungseinheit 3 bzw. das Hubwerk 14 aktiviert und das Schleppgerät 4 so verschwenkt, dass die aktuell gewünschte Höhenlage angenähert oder erreicht wird.

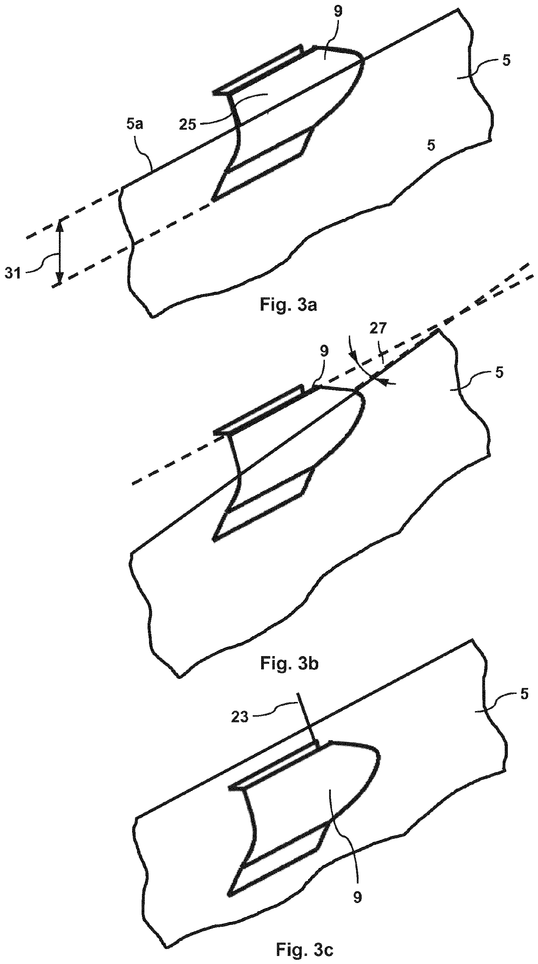

Entsprechend Fig. 2 werden vom Fahrzeug 2 aus die einzelnen Pflugscharen 9a₁ bis 9a₅; 9b₁ bis 9b₅ mit der Kamera 8 aufgenommen. Dabei ist - wie in den Fig. 3a bis 3c dargestellt - insbesondere von Bedeutung, in welcher Höhenlage 25 (Fig. 3a) und Neigung (Winkellage 27 in Fig. 3b) die Erde durch die Pflugschar 9 läuft. Diese Informationen werden aus dem Kamerabild extrahiert, das zeigt, wo eine Pflugschar 9 mit Erde des Bodens 5 bedeckt ist und wo nicht. Solange die Pflugschar 9 nur partiell mit Erde bedeckt ist (Fig. 3a, 3b), sind vermutlich keine zusätzlichen Vorrichtungen nötig. Teilweise wird aber so tief gepflügt, dass die umbrechende Erde die Pflugschar 9 voll verdeckt (Fig. 3c) oder sogar leicht darüber hinausragt. Für diesen Fall kann es nötig sein, an der Pflugschar 9 einen zusätzlichen, über die obere Kante der Pflugschar 9 hinausragenden, Ansatz 23 anzubringen (z. B. in Form eines fest montierten Metallstabes), anhand dessen auf die Position der verdeckten Pflugschar 9 zurückgeschlossen werden kann.

In Fig. 3a sind mit 25 eine aktuelle Höhenlage der Pflugschar 9 oberhalb der Bodenoberfläche 5a und mit 31 eine aktuelle Tiefenlage (Eindringtiefe) der Pflugschar 9 unterhalb der Bodenoberfläche 5a bezeichnet. Dabei ragt der obere, von der Seite betrachtete Bereich (Flächenanteil - hier schraffiert markiert) der Pflugschar 9 aus dem Boden 5 heraus und ist nicht mit Erde bedeckt; der untere Bereich der Pflugschar 9 ragt in den Boden 5 hinein und ist mit Erde bedeckt.

In der Praxis stellt bei gängigen Systemen der Fahrer bei Beginn des Pflügens die gewünschte Tiefe z. B. über einen Drehknopf ein. Die Verdeckung der Pflugscharen 9a₁ bis 9a₅, die der vom Fahrer gewünschten Tiefe entspricht, wird dabei gespeichert und bildet dann den Sollwert für die Pflugtiefe (Referenz-Tiefenlage 32). Das System kann daraufhin den Pflug automatisch immer so positionieren, dass alle Pflugscharen 9a₁ bis 9a₅ möglichst in der am Anfang eingestellten Tiefe laufen.

Sofern nicht alle Freiheitsgrade des Pflugs vom System über Stellglieder angesteuert werden können, ist es auch möglich, dem Fahrer eine ungünstige Pflugeinstellung zu signalisieren und ihn dabei zu unterstützen, seine manuellen Einstellungen am Pflug bzw. Hubwerk 14 zu verbessern.

Sind für alle Freiheitsgrade Stellglieder vorhanden, so können diese Einstellungen vom System übernommen werden, dem Fahrer wird dadurch die Einstellarbeit abgenommen. Die vorhandenen Freiheitsgrade und dazugehörigen Stellglieder sind im Wesentlichen:

| **Freiheitsgrad** | **Stellglieder** |
|---|---|
| Pflughöhe | Unterlenkerzylinder des Fahrzeuges |
| Pflugneigung | Oberlenkerzylinder (bei einigen Traktoren vorhanden, Nutzung für dynamische/automatische Anpassungen) |
| Pflugdrehung um Längsachse | Wendezylinder des Pfluges (bei den meisten Pflügen vorhanden, Nutzung für dynamische/automatische Anpassungen) |
| Pflugdrehung um Hochachse | Schrauben zur Einstellung der beiden Unterlenkerlängen (nur manuell einstellbar) |

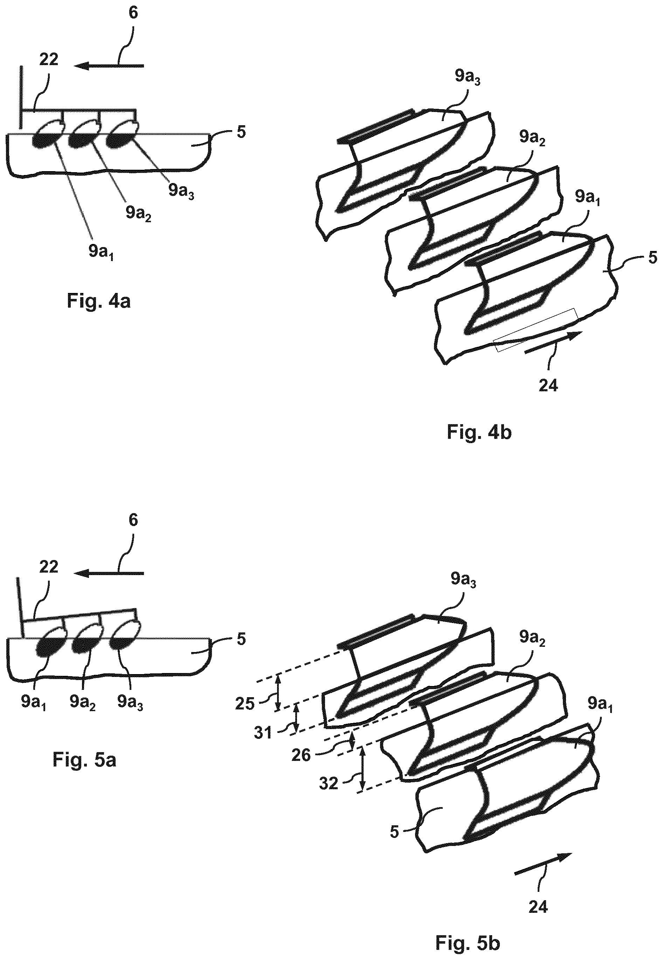

Die Fig. 4a und 4b zeigen eine gewünschte bzw. optimale Pflugposition (Fig. 4a Seitenansicht, Fig. 4b Sicht der Kamera 8 auf die Pflugscharen 9a₁ bis 9a₃). Dabei liegt eine im Wesentlichen gleiche Tiefe aller Pflugscharen vor, das heißt alle Pflugscharen 9a₁ bis 9a₃ sind zu gleichen Teilen mit umbrechender Erde bedeckt. Mit 6 ist die Fahrtrichtung, mit 24 ist die Bewegungsrichtung der umbrechenden Erde des Bodens 5 bezeichnet.

Nach den Fig. 5a und 5b liegt der Pflug vorne zu tief (Fig. 5a Seitenansicht, Fig. 5b Sicht der Kamera 8 auf die Pflugscharen 9a₁ bis 9a₃). Die Höhe der Verdeckung der einzelnen Pflugscharen ist deutlich unterschiedlich. In Fahrtrichtung 6 gesehen besteht vorn deutlich eine größere Überdeckung als hinten (dies lässt sich visuell mit der Kamera aufgrund der Form des freiliegenden Flächenanteils einer Pflugschar erfassen). Dies kann Folge einer falschen Einstellung des Oberlenkers 16 (zu kurz eingestellt) und damit dauerhaft gegeben sein oder sich dynamisch aufgrund wechselnder Bodentopologie ergeben (z. B. Einfahren in eine Senke). Im Pflugbild äußert sich dies in einem Sägezahnprofil aus Furchen unterschiedlicher Tiefe. In der Fig. 5 ist an der Pflugschar 9a₃ mit 25 eine aktuell gemessene Höhenlage und mit 31 eine aktuell gemessene Tiefenlage und an der Pflugschar 9a₂ ist mit 26 die Referenz - Höhenlage (optimale Höhenlage) und mit 32 die Referenz - Tiefenlage (optimale Tiefenlage) bezeichnet.

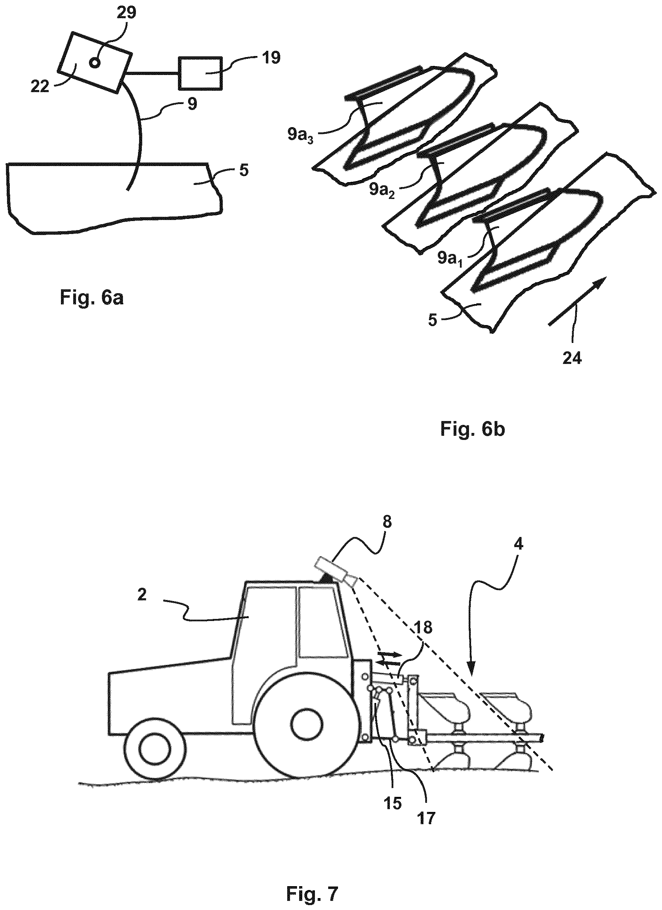

Entsprechend den Fig. 6a und 6b ist der Pflug um eine Längsachse 29 verdreht bzw. verkippt (Fig. 6a Pflugansicht von vorne, Fig. 6b Sicht der Kamera 8 auf die Pflugschare 9a₁ bis 9a₃). Der Pflug ist um eine Längsachse 29 in Uhrzeigerrichtung gedreht. Als Stellglied für eine Rückdrehung in eine Sollposition dient ein Wendezylinder 19 für den Pflug.

Fig. 7 zeigt eine schematische Darstellung eines Fahrzeugs 2 (Ackerschleppers) während des Pflügens, wobei der Pflug über den Unterlenker 17 und den hydraulisch verstellbaren Oberlenkerzylinder 18 mit dem Traktor verbunden ist. Da der Unterlenker 17 durch den Unterlenkerzylinder 15 in seiner Höhe verstellt werden kann, ist es möglich den Pflug in dieser Konstellation sowohl in seiner Höhe, als auch in seiner Neigung um die Querachse zu verstellen.

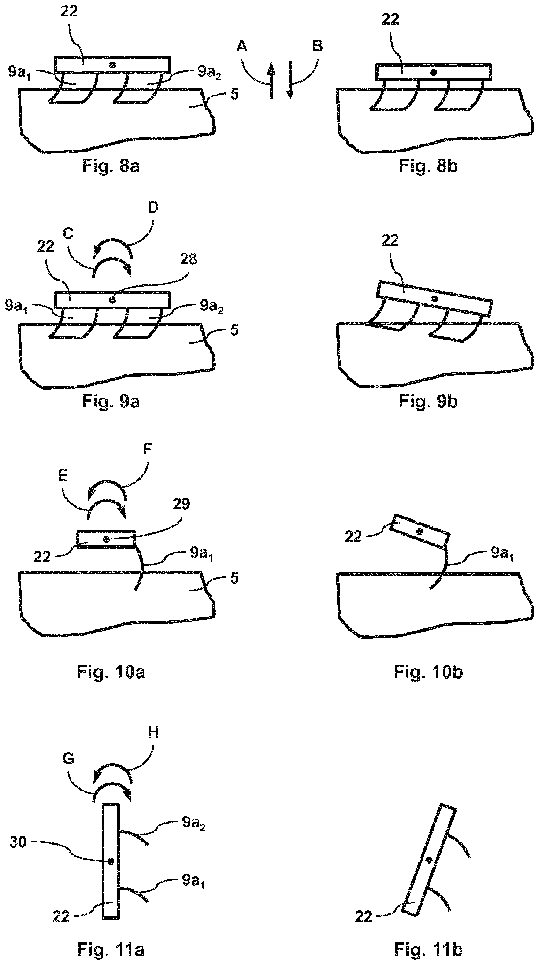

Nach Fig. 8a, 8b ist der Träger 22 mit den beiden Pflugscharen 9a₁ bis 9a₂ in Richtung der Pfeile A und B in seiner Höhenlage verstellt bzw. verstellbar. Entsprechend Fig. 9a, 9b ist der Träger 22 mit den beiden Pflugscharen 9a₁ bis 9a₂ in Richtung der Pfeile C, D um eine Querachse 28 in seiner Neigung verstellt bzw. verstellbar. Gemäß Fig. 10a, 10b ist der Träger 22 mit den beiden Pflugscharen 9a₁ bis 9a₂ in Richtung der Pfeile E, F um eine Längsachse 29 verdrehbar bzw. verdreht. Nach Fig. 11a, 11b ist der Träger 22 mit den beiden Pflugscharen 9a₁ bis 9a₂ in Richtung der Pfeile G, H um eine Höhenachse 30 verdrehbar bzw. verdreht. Die Fig. 7 bis 10 stellen die Freiheitsgrade des Pflugs dar. Für die Bestimmung/Einstellung/Korrektur der bzw. aller vorstehend genannten Freiheitsgrade können speziell auf einzelne Pflugscharen gerichtete Kameras (Spezialkamera - insbesondere mit einer seitlichen Ansicht auf die Pflugschar(en)) und/oder eine den gesamten Pflug erfassende Rückfahrkamera in Kombination mit mindestens einer Spezialkamera verwendet werden.

### Bezugszeichen

- 1: Vorrichtung
- 2: Fahrzeug
- 3: hydraulische Betätigungseinheit
- 4: Schleppgerät
- 5: Boden
- 5a: Bodenoberfläche
- 6: Fahrtrichtung
- 7: Lageerfassungseinheit
- 8: Kamera
- 9: Pflugschar
- 9a₁ bis 9a₅: Pflugscharen unterhalb des Trägers
- 9b₁ bis 9b₅: Pflugscharen oberhalb des Trägers
- 10: Auswerteeinheit
- 11: datenleitende Verbindung
- 12: Fahrzeugsteuerung
- 13: Steuergerät
- 14: Hubwerk
- 15: Unterlenkerzylinder
- 16: Oberlenker
- 17: Unterlenker
- 18: Oberlenkerzylinder
- 19: Wendezylinder
- 20: Pumpe
- 21: Regelventil
- 22: Träger
- 23: Ansatz
- 24: Bewegungsrichtung der Erde
- 25: Höhenlage
- 26: Referenz-Höhenlage
- 27: Winkellage
- 28: Querachse
- 29: Längsachse
- 30: Höhenachse
- 31: Tiefenlage
- 32: Referenz-Tiefenlage

## Patentansprüche

1. Vorrichtung (1) an einem Fahrzeug (2) mit einer hydraulischen Betätigungseinheit (3) zur Regelung des Betriebs eines Schleppgeräts (4) an dem Fahrzeug (2), wobei das Schleppgerät (4) mindestens eine Pflugschar (9, 9a₁ bis 9a₅; 9b₁ bis 9b₅) aufweist, umfassend zumindest eine Lageerfassungseinheit (7) mit mindestens einer Kamera (8), eine Auswerteeinheit (10) und eine datenleitende Verbindung (11) hin zu einem der hydraulischen Betätigungseinheit (3) zugeordneten Steuergerät (13), wobei die Auswerteeinheit (10) eingerichtet ist, Bilddaten der mindestens einen Kamera (8) zu analysieren und wobei das Steuergerät (13) derart eingerichtet ist, dass ein Regelungssignal der Auswerteeinheit (10) an das Steuergerät (13) übermittelbar ist, wobei die Auswerteeinheit eingerichtet ist, die mindestens eine Pflugschar (9, 9a1 bis 9a5; 9b1 bis 9b5) und den angrenzenden Boden (5) mittels der darauf gerichteten Kamera (8) zu erfassen, **dadurch gekennzeichnet, dass** die Auswerteeinheit (10) eingerichtet ist, einen Flächenanteil der mindestens einen Pflugschar (9a, 9a1 bis 9a5; 9b1 bis 9b5), der nicht vom Boden (5) bedeckt ist, zu ermitteln, den ermittelten Flächenanteil mit einem vorgegebenen Referenz-Flächenanteil zu vergleichen, und die hydraulische Betätigungseinheit (3) zu aktivieren, wenn der ermittelte Flächenanteil von dem Referenz-Flächenanteil abweicht.

2. Vorrichtung (1) nach Anspruch 1, **dadurch gekennzeichnet, dass** die mindestens eine Kamera (8) eine seitliche Form mindestens einer Pflugschar (9, 9a₁ bis 9a₅; 9b₁ bis 9b₅) im Betrieb des Schleppgeräts (4) erfassen kann.

3. Vorrichtung (1) nach Anspruch 1 oder 2, **dadurch gekennzeichnet, dass** die mindestens eine Kamera (8) seitlich zur Achse des Schleppgeräts (4) versetzt angeordnet oder positionierbar ist.

4. Vorrichtung (1) nach einem der vorhergehenden Ansprüche, **dadurch gekennzeichnet, dass** die mindestens eine Kamera (8) einen Bildbereich hat, der kleiner ist, als die Dimensionen des Schleppgeräts (4) ist.

5. Vorrichtung (1) nach einem der vorhergehenden Ansprüche, **dadurch gekennzeichnet, dass** an der mindestens einen Pflugschar (9, 9a1 bis 9a5; 9b1 bis 9b5) zumindest ein Ansatz (23) vorhanden ist, der über die Pflugschar (9, 9a1 bis 9a5; 9b1 bis 9b5) herausragt.

6. Verfahren zum Betrieb eines Fahrzeugs (2) mit einer hydraulischen Betätigungseinheit (3) zur Regelung des Betriebs eines Schleppgeräts (4) an dem Fahrzeug (2), wobei das Verfahren zumindest die folgenden Schritte umfasst:
a) Erfassen der mindestens einen Pflugschar (9, 9a₁ bis 9a₅; 9b₁ bis 9b₅) und des angrenzenden Bodens (5) mittels einer darauf gerichteten Kamera (8);
b) Ermitteln eines Flächenanteils der mindestens einen Pflugschar (9, 9a₁ bis 9a₅; 9b₁ bis 9b₅), der nicht vom Boden (5) bedeckt ist;
c) Vergleichen des ermittelten Flächenanteils mit einem vorgegebenen Referenz-Flächenanteils;
d) Aktivieren der hydraulischen Betätigungseinheit (3), wenn der ermittelte Flächenanteil von dem Referenz-Flächenanteil abweicht.

7. Verfahren nach Anspruch 6, bei dem alle Schritte a) bis d) während der Fahrt des Fahrzeugs (2) durchgeführt werden.

8. Verfahren nach Anspruch 6 oder 7, wobei ausgehend von dem ermittelten Flächenanteil der mindestens einen Pflugschar (9, 9a₁ bis 9a₅; 9b₁ bis 9b₅) zumindest eine Höhenlage (25) zum Boden (5), eine Neigung um eine Querachse (28) oder eine Drehung um eine Längsachse (29) der mindestens einen Pflugschar (9, 9a₁-9a₅; 9b₁-9b₅) ermittelt wird.

9. Verfahren nach einem der Ansprüche 6 bis 8, wobei hinsichtlich des Schleppgeräts (4) zumindest eine Tiefenlage oder eine Ausrichtung zum Boden (5) aus einer direkten Beobachtung der Pflugscharen (9, 9a₁ bis 9a₅; 9b₁ bis 9b₅) mittels der mindestens einen Kamera (8) ermittelt wird.

10. Verwendung einer Vorrichtung (1) nach einem der Ansprüche 1-5 mit einer Kamera (8) an einem Fahrzeug (2) mit einer hydraulischen Betätigungseinheit (3), welches ein Schleppgerät (4) umfasst, zur Ermittlung eines freiliegenden Flächenanteils mindestens einer Pflugschar (9, 9a₁ bis 9a₅; 9b₁ bis 9b₅) des Schleppgeräts (4) und zur Regelung der Lage des Schleppgeräts (4) an dem Fahrzeug (2) im Betrieb.

## Claims

1. Device (1) on a vehicle (2) having a hydraulic activation unit (3) for regulating the operation of a towing device (4) on the vehicle (2), wherein the towing device (4) has at least one ploughshare (9, 9a₁ to 9a₅; 9b₁ to 9b₅), comprising at least one position-sensing unit (7) with at least one camera (8), an evaluation unit (10) and a data-conducting connection (11) to a control device (13) which is assigned to the hydraulic activation unit (3), wherein the evaluation unit (10) is configured to analyse image data of the at least one camera (8), and wherein the control device (13) is configured in such a way that a regulating signal of the evaluation unit (10) can be transmitted to the control device (13), wherein the evaluation unit is configured to sense the at least one ploughshare (9, 9a₁ to 9a₅; 9b₁ to 9b₅) and the adjoining ground (5) by means of the camera (8) which is directed onto the latter, **characterized**
**in that** the evaluation unit (10) is configured to determine an area of the at least one ploughshare (9a, 9a₁ to 9a₅; 9b₁ to 9b₅) which is not covered by the ground (5), to compare the determined area with a prescribed reference area and to activate the hydraulic activation unit (3) if the determined area deviates from the reference area.

2. Device (1) according to Claim 1, **characterized in that** the at least one camera (8) can sense a lateral shape of at least one ploughshare (9, 9a₁ to 9a₅; 9b₁ to 9b₅) during the operation of the towing device (4) .

3. Device (1) according to Claim 1 or 2, **characterized in that** the at least one camera (8) is arranged or can be positioned offset laterally with respect to the axis of the towing device (4).

4. Device (1) according to one of the preceding claims, **characterized in that** the at least one camera (8) has an image region which is smaller than the dimensions of the towing device (4).

5. Device (1) according to one of the preceding claims, **characterized in that** at least one attachment (23), which projects beyond the ploughshare (9, 9a₁ to 9a₅; 9b₁ to 9b₅) is present on the at least one ploughshare (9, 9a₁ to 9a₅; 9b₁ to 9b₅).

6. Method for operating a vehicle (2) having a hydraulic activation unit (3) for regulating the operation of a towing device (4) on the vehicle (2), wherein the method comprises at least the following steps:
a) sensing the at least one ploughshare (9, 9a₁ to 9a₅; 9b₁ to 9b₅) and the adjoining ground (5) by means of a camera (8) which is directed onto the latter;
b) sensing an area of the at least one ploughshare (9, 9a₁ to 9a₅; 9b₁ to 9b₅) which is not covered by the ground (5);
c) comparing the determined area with a prescribed reference area;
d) activating the hydraulic activation unit (3) if the determined area deviates from the reference area.

7. Method according to Claim 6, in which all the steps a) to d) are carried out while the vehicle (2) is travelling.

8. Method according to Claim 6 or 7, wherein at least one height (25) with respect to the ground (5), one inclination about a lateral axis (28) or one rotation about a longitudinal axis (29) of the at least one ploughshare (9, 9a₁ to 9a₅; 9b₁ to 9b₅) is determined on the basis of the determined area of the at least one ploughshare (9, 9a₁ to 9a₅; 9b₁ to 9b₅).

9. Method according to one of Claims 6 to 8, wherein at least one depth or one orientation with respect to the ground (5) with respect to the towing device (4) is determined from direct observation of the ploughshares (9, 9a₁ to 9a₅; 9b₁ to 9b₅) by means of the at least one camera (8).

10. Use of a device (1) according to one of Claims 1-5 with a camera (8) on a vehicle (2) having a hydraulic activation unit (3), which comprises a towing device (4) for determining an exposed area of at least one ploughshare (9, 9a₁ to 9a₅; 9b₁ to 9b₅) of the towing device (4) and for regulating the position of the towing device (4) on the vehicle (2) during operation.

## Revendications

1. Dispositif (1) monté sur un véhicule (2) avec une unité d'actionnement hydraulique (3) pour la régulation du fonctionnement d'un appareil de remorquage (4) sur le véhicule (2), dans lequel l'appareil de remorquage (4) présente au moins un soc de charrue (9, 9a₁ à 9a₅ ; 9b₁ à 9b₅), comprenant au moins une unité de détection de position (7) avec au moins une caméra (8), une unité d'exploitation (10) et une connexion de transport de données (11) en direction d'un appareil de commande (13) associé à l'unité d'actionnement hydraulique (3), dans lequel l'unité d'exploitation (10) est configurée pour analyser des données d'image de ladite au moins une caméra (8) et dans lequel l'appareil de commande (13) est configuré de telle manière qu'un signal de régulation puisse être transmis de l'unité d'exploitation (10) à l'appareil de commande (13), dans lequel l'unité d'exploitation est configurée pour détecter ledit au moins un soc de charrue (9, 9a1 à 9a5 ; 9b1 à 9b5) et le sol voisin (5) au moyen de la caméra (8) dirigée vers ceux-ci, **caractérisé en ce que** l'unité d'exploitation (10) est configurée pour déterminer une partie de surface dudit au moins un soc de charrue (9, 9a1 à 9a5 ; 9b1 à 9b5), qui n'est pas recouverte par le sol (5), comparer la partie de surface déterminée à une partie de surface de référence prédéterminée, et activer l'unité d'actionnement hydraulique (3), lorsque la partie de surface déterminée s'écarte de la partie de surface de référence.

2. Dispositif (1) selon la revendication 1, **caractérisé en ce que** ladite au moins une caméra (8) peut détecter une forme latérale d'au moins un soc de charrue (9, 9a₁ à 9a₅ ; 9b₁ à 9b₅) pendant le fonctionnement de l'appareil de remorquage (4) .

3. Dispositif (1) selon une revendication 1 ou 2, **caractérisé en ce que** ladite au moins une caméra (8) est disposée ou peut être positionnée latéralement en décalage par rapport à l'axe de l'appareil de remorquage (4) .

4. Dispositif (1) selon l'une quelconque des revendications précédentes, **caractérisé en ce que** ladite au moins une caméra (8) comporte une zone d'image, qui est plus petite que les dimensions de l'appareil de remorquage (4).

5. Dispositif (1) selon l'une quelconque des revendications précédentes, **caractérisé en ce qu'**il se trouve sur au moins un soc de charrue (9, 9a1 à 9a5 ; 9b1 à 9b5) au moins un ajout (23), qui est en saillie sur le soc de charrue (9, 9a1 à 9a5 ; 9b1 à 9b5).

6. Procédé de conduite d'un véhicule (2) avec une unité d'actionnement hydraulique (3) pour la régulation du fonctionnement d'un appareil de remorquage (4) sur le véhicule (2), dans lequel le procédé comprend au moins les étapes suivantes :
a) détecter ledit au moins un soc de charrue (9, 9a₁ à 9a₅ ; 9b₁ à 9b₅) et le sol voisin (5) au moyen d'une caméra (8) dirigée vers ceux-ci ;
b) déterminer une partie de surface dudit au moins un soc de charrue (9, 9a₁ à 9a₅ ; 9b₁ à 9b₅) qui n'est pas recouverte par le sol (5) ;
c) comparer la partie de surface déterminée à une partie de surface de référence prédéterminée ;
d) activer l'unité d'actionnement hydraulique (3), lorsque la partie de surface déterminée s'écarte de la partie de surface de référence.

7. Procédé selon la revendication 6, dans lequel toutes les étapes a) à d) sont exécutées pendant la marche du véhicule (2).

8. Procédé selon une revendication 6 ou 7, dans lequel on détermine à partir de la partie de surface déterminée dudit au moins un soc de charrue (9, 9a₁ à 9a₅ ; 9b₁ à 9b₅) au moins une position en hauteur (25) par rapport au sol (5), une inclinaison autour d'un axe transversal (28) ou une rotation autour d'un axe longitudinal (29) dudit au moins un soc de charrue (9, 9a₁ à 9a₅ ; 9b₁ à 9b₅).

9. Procédé selon l'une quelconque des revendications 6 à 8, dans lequel on détermine au moyen de ladite au moins une caméra (8), en ce qui concerne l'appareil de remorquage (4), au moins une position en profondeur ou une orientation par rapport au sol (5) à partir d'une observation directe des socs de charrue (9, 9a₁ à 9a₅ ; 9b₁ à 9b₅).

10. Utilisation d'un dispositif (1) selon l'une quelconque des revendications 1 à 5 avec une caméra (8) sur un véhicule (2) avec une unité d'actionnement hydraulique (3), qui comprend un appareil de remorquage (4), pour la détermination d'une partie de surface libre d'au moins un soc de charrue (9, 9a₁ à 9a₅ ; 9b₁ à 9b₅) de l'appareil de remorquage (4) et pour la régulation de la position de l'appareil de remorquage (4) sur le véhicule (2) pendant le fonctionnement.
